# EUROPÄISCHE PATENTSCHRIFT

(11) **EP 3 924 134 B1**
(45) Veröffentlichungstag und Bekanntmachung des Hinweises auf die Patenterteilung: **16.08.2023**
(21) Anmeldenummer: 20701561.1
(22) Anmeldetag: 20.01.2020
(51) Int. Cl.: B23K 26/03

(54) **LASERBEARBEITUNGSSYSTEM ZUR BEARBEITUNG EINES WERKSTÜCKS MITTELS EINES LASERSTRAHLS UND VERFAHREN ZUM STEUERN EINES LASERBEARBEITUNGSSYSTEMS**
LASER MACHINING SYSTEM FOR MACHINING A WORKPIECE BY MEANS OF A LASER BEAM, AND METHOD FOR CONTROLLING A LASER MACHINING SYSTEM
SYSTÈME D'USINAGE AU LASER POUR L'USINAGE D'UNE PIÈCE AU MOYEN D'UN FAISCEAU LASER, ET PROCÉDÉ DE COMMANDE D'UN SYSTÈME D'USINAGE AU LASER

(30) Priorität: 14.02.2019 DE 102019103734
(43) Veröffentlichungstag der Anmeldung: 22.12.2021
(73) Patentinhaber: Precitec GmbH & Co. KG, 76571 Gaggenau-Bad Rotenfels (DE)
(72) Erfinder: MOSER, Rüdiger, 76316 Malsch (DE)
(74) Vertreter: Ter Meer Steinmeister & Partner
(86) Internationale Anmeldenummer: PCT/EP2020/051247
(87) Internationale Veröffentlichungsnummer: WO 2020/164862

(56) Entgegenhaltungen:
- DE-A1- 19 852 302
- DE-B3-102015 012 565

## Beschreibung

Die vorliegende Erfindung betrifft ein Laserbearbeitungssystem zur Bearbeitung eines Werkstücks mittels eines Laserstrahls, insbesondere ein Laserschweißsystem, und ein Verfahren zum Steuern eines Laserbearbeitungssystems. Vorzugsweise betrifft die vorliegende Erfindung ein Laserbearbeitungssystem mit einem optischen Kohärenztomographen zur interferometrischen Abstandsmessung, sowie ein Verfahren zum Steuern desselben.

### Hintergrund

In einem Bearbeitungssystem zur Bearbeitung eines Werkstücks mittels eines Laserstrahls wird der von einer Laserlichtquelle oder einem Ende einer Laserleitfaser austretende Laserstrahl mit Hilfe einer Strahlführungs- und Fokussieroptik auf das zu bearbeitende Werkstück fokussiert oder gebündelt. Die Bearbeitung kann beispielsweise ein Laserschneiden, ein Laserlöten oder ein Laserschweißen, insbesondere ein Lasertiefschweißen, umfassen. Das Laserbearbeitungssystem kann beispielsweise einen Laserbearbeitungskopf, insbesondere einen Schweißkopf, umfassen.

Beim Einstrahlen des Laserstrahls auf das zu bearbeitende Werkstück wird in einem Einstrahlbereich das Material des Werkstücks, beispielsweise Metall, durch die Laserleistung so stark erhitzt, dass es in einen dampfförmigen Zustand bzw. einen Plasmazustand übergeht. Dieser Bereich wird als sogenannte "Dampfkapillare", oder "Keyhole", bezeichnet.

Dabei ist es wünschenswert, die Tiefe der bei einer Laserschweißbearbeitung entstehenden Dampfkapillare so genau wie möglich zu bestimmen bzw. zu messen. Die Tiefe der Dampfkapillare steht beispielsweise im Zusammenhang mit einer Einschweißtiefe, also der Tiefe, bis zu der das Metall während eines Schweißprozesses aufgeschmolzen wurde. Die Tiefe der Dampfkapillare wird gewöhnlich an der tiefsten Stelle der Dampfkapillare gemessen. Diese Stelle wird auch als "Keyholeboden" oder "Bearbeitungsgrund" bezeichnet. In der vorliegenden Offenbarung wird mit "Tiefe der Dampfkapillare" oder "Keyholetiefe" die maximale Tiefe der Dampfkapillare bezeichnet.

Die Tiefe der Dampfkapillare ist von großem Interesse: Einerseits lässt die Kenntnis über die Tiefe der Dampfkapillare Rückschlüsse über die Festigkeit einer Schweißverbindung zu, d.h. , ob ausreichend tief eingeschweißt wurde, andererseits kann über die Kenntnis der Tiefe der Dampfkapillare sichergestellt werden, dass die Schweißnaht an der Unterseite nicht sichtbar ist, also keine unerwünschte Durchschweißung vorliegt.

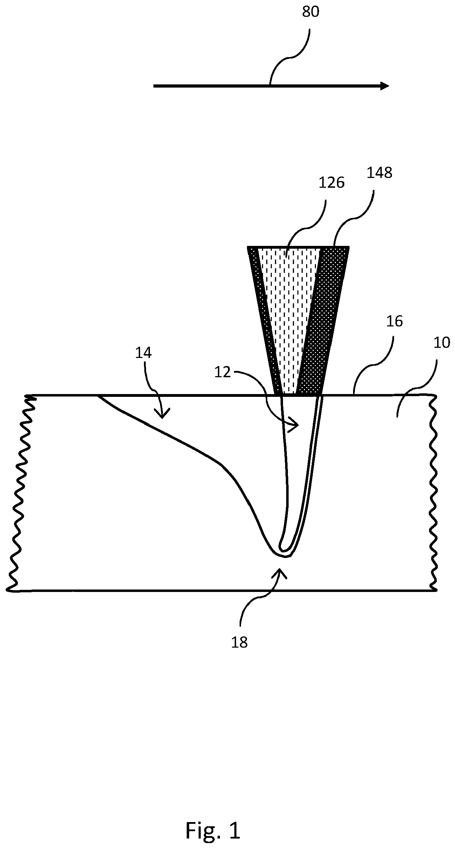

Fig. 1 ist eine schematische Querschnittsansicht eines zu bearbeitenden Werkstücks 10 während eines Laserbearbeitungsprozesses, insbesondere eines Schweißprozesses, der von einem Laserbearbeitungssystem ausgeführt wird. Während des Laserbearbeitungsprozesses wird mittels eines Laserbearbeitungskopfes (nicht gezeigt) des Laserbearbeitungssystems ein Laserstrahl 148 auf eine Oberfläche 16 eines Werkstücks 10 eingestrahlt, wobei der Laserstrahl entlang einer sogenannten Bearbeitungsrichtung 80 über die Oberfläche 16 bewegt wird.

Dabei bildet sich in einem Bereich zwischen der Oberfläche 16 des Werkstücks 10, auf die der Laserstrahl 148 eingestrahlt wird, bis hin zu einer gewissen Tiefe innerhalb des Werkstücks 10 eine Dampfkapillare 12 aus. Im Bereich der Dampfkapillare erhitzt sich das Material des Werkstücks 10 durch die eingestrahlte Laserleistung so stark, dass es verdampft. Mit anderen Worten befindet sich das Material im Bereich der Dampfkapillare 12 in einem dampfförmigen Aggregatszustand. Die Dampfkapillare 12 ist von einem Bereich 14 umgeben, in dem das Material in einem geschmolzenen Zustand, also in einem flüssigen Aggregatszustand vorliegt. Der Bereich 14 wird auch als "Schmelzbad" bezeichnet.

Die Messung der Tiefe der Dampfkapillare erfolgt typischerweise kontaktlos mittels spektralinterferometrischer Abstandsmessung bzw. optischer Abstandsmessung mittels optischer Kohärenztomographie (englisch "optical coherence tomography", kurz "OCT"). Hierfür wird, wie in Fig. 1 dargestellt, ein optischer Messstrahl 126 eines optischen Kohärenztomographen (nicht gezeigt) zum Messen der Tiefe der Dampfkapillare 12 auf das Werkstück 10 eingestrahlt. Am Auftreffort des Messtrahls auf dem Werkstück 10, dem sogenannten Messfleck, wird der Messstrahl vom Werkstück 10 in den optischen Kohärenztomographen zurück reflektiert. Der Messstrahl 126 kann im Wesentlichen parallel oder koaxial zum Laserstrahl 148 verlaufen.

Um die Tiefe der Dampfkapillare korrekt messen zu können, muss der optische Messstrahl so ausgerichtet sein, dass das Licht des Messtrahls das untere Ende der Dampfkapillare erreicht und das von dort reflektierte Licht wieder zurück in den optischen Kohärenztomographen gelangt.

Dabei ist jedoch zu beachten, dass die geometrischen Eigenschaften der Dampfkapillare, wie z.B. Form, Größe, etc., und ihre Position auf der Werkstückoberfläche von den Parametern des Laserbearbeitungsprozesses abhängen. Neben der Vorschubgeschwindigkeit spielen auch Parameter wie die Bearbeitungsrichtung, die Fokusgröße des Laserstrahls, das Material des Werkstücks und die Schweißgeometrie, d.h. die Form bzw. der Verlauf der Schweißnaht, eine entscheidende Rolle.

Beispielsweise hat eine Variation der Vorschubgeschwindigkeit des Laserstrahls folgende Auswirkungen auf Eigenschaften der Dampfkapillare: Zu- oder Abnahme des Neigungswinkels der Vorderwand der Dampfkapillare; Verschiebung der Position der tiefsten Stelle der Dampfkapillare (sogenannter "Keyholeboden") bzw. einer unteren Öffnung der Dampfkapillare bei einer Durchschweißung in den Nachlauf; Zu- oder Abnahme der Öffnung der Dampfkapillare in Bearbeitungsrichtung; oder Verschiebung der Position der Öffnung der Dampfkapillare relativ zu der lateralen Fokusposition des Laserstrahls. Denn ein Punkt auf der Werkstückoberfläche benötigt eine gewisse Zeit, um eine ausreichende Temperatur zur Ausbildung einer Dampfkapillare zu erlangen.

Da die geometrischen Eigenschaften der Dampfkapillare, insbesondere ihre Position und Größe, wie vorstehend beschrieben abhängig von den Parametern des jeweils ausgeführten Laserbearbeitungsprozesses sind, muss der optische Messtrahl auf den jeweiligen Laserbearbeitungsprozess einstellbar sein oder muss während des jeweiligen Laserbearbeitungsprozesses regelbar sein. Insbesondere muss ein Auftreffort des Messtrahls (auch als "Position des Messstrahls" bezeichnet) auf dem Werkstück bzw. die Fokuslage des Messtrahls einstellbar bzw. regelbar sein. Insbesondere muss die Position des Messtrahls auf der Werkstoffoberfläche bzw. der Auftreffort des Messtrahls auf der Werkstückoberfläche relativ zur Position der Dampfkapillare auf der Werkstückoberfläche einstellbar bzw. regelbar sein, sodass sichergestellt ist, dass der Messtrahl stets am für die Einschweißtiefenmessung korrekten Ort auf das Werkstück trifft. Die Position auf der Werkstückoberfläche kann auch als "laterale Position" bezeichnet werden.

Im Fall von linearen Schweißnähten, d.h. geradlinig verlaufenden Schweißnähten, kann eine geeignete Position des Messflecks relativ zur Position der Dampfkapillare für die jeweils eingestellten Prozessparameter vorab bestimmt bzw. eingestellt werden, und kann dann während der Ausführung des Schweißprozesses unverändert bleiben. Bei linearen Schweißnähten kann es sich also um eine statische Position für die jeweiligen Parameter handeln.

Zur Vermessung der tiefsten Stelle der Dampfkapillare muss hier für jeden Satz von Parametern des Schweißprozesses die optimale Position des optischen Messtrahls für die Einschweißtiefenmessung vor der Durchführung des Schweißprozesses bestimmt werden. D.h. die Einstellung, wie beispielsweise die Ausrichtung, Fokuslage und/oder Position des optischen Messtrahls relativ zum Laserstrahl bzw. zum Laserbearbeitungskopf, muss vorab bestimmt werden. Eine Veränderung der Position des Messtrahls, z.B. durch Drift von Ablenkeinheiten oder sonstigen Ungenauigkeiten im Laserbearbeitungssystem, ist jedoch nicht ausgeschlossen und führt zu einer Abweichung von der idealen Messposition während des Schweißprozesses. Bei der Verwendung von Galvo-Scannern als Ablenkeinheit für den Messstrahl ist eine Drift nur schwer zu verhindern. Insbesondere in der Serienproduktion muss sichergestellt sein, dass über Wochen, Monate oder Jahre die Position des Messstrahls relativ zur Position der Dampfkapillare unverändert bleibt. Weiterhin sind für die beschriebene Voreinstellung der Position des Messstrahls Testschweißungen an Werkstücken erforderlich, um für den jeweiligen Satz von Parametern sicherzustellen, dass mit der voreingestellten Position des Messstrahls die tiefste Stelle der Dampfkapillare vermessen wird.

Im Fall von gekrümmten Schweißnähten oder Schweißbahnen (z.B. eine 90° Kurve, Spirale, C-förmige Geometrien, etc.) ist eine Anpassung der Position des Messflecks während des Schweißprozesses erforderlich. Zu jedem gegebenen Zeitpunkt während des Schweißprozesses muss die optimale Position für die Einschweißtiefenmessung des Messflecks bekannt sein und während des Laserbearbeitungsprozesses zeitlich präzise angefahren werden, um keine falschen Tiefeninformationen über die Dampfkapillare zu erhalten. Im Fall einer gekrümmten Schweißnaht wird das Verfahren zur Bestimmung der tiefsten Stelle der Dampfkapillare daher deutlich aufwändiger, da in jedem Segment der gekrümmten Schweißnaht eine andere optimale Position des Messflecks vorliegt, die vorab für jedes Segment bestimmt bzw. eingestellt werden muss. Für eine korrekte Einschweißtiefenmessung müssen die Segmente daher entweder sehr klein gewählt werden, oder es muss zwischen den Segmenten interpoliert werden.

Typischerweise weist ein optischer Kohärenztomograph einen einzigen Messstrahl auf. Demnach kann zu einem gegebenen Zeitpunkt lediglich an einem einzigen Punkt auf der Werkstückoberfläche eine Abstandsmessung durchgeführt werden. Dies bedeutet, dass entweder an der tiefsten Stelle der Dampfkapillare gemessen werden kann, oder in dessen Umgebung (z.B. einer Seitenwand der Dampfkapillare, der Werkstückoberfläche oder der Nahtoberraupe). Wird der Messstrahl unverändert an einer vorgegebenen Position gehalten, kann anhand der gewonnenen Abstandsinformationen nicht festgestellt werden, ob es sich bei der Position des Messtrahls um die tiefste Stelle der Dampfkapillare handelt, oder ob der Messtrahl auf eine Seitenwand der Dampfkapillare trifft.

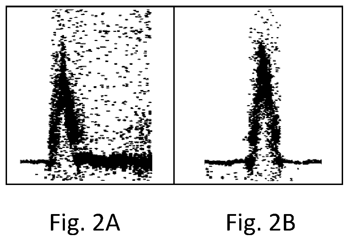

Sind neben dem optischen Kohärenztomographen keine weiteren Vorrichtungen vorhanden, um Informationen über die Dampfkapillare zu erhalten, ist es notwendig, die Position des Messstrahls über die Werkstückoberfläche zu bewegen und somit anhand der aus der Ausrichtung des optischen Messstrahls bekannten Position des Messflecks und der ermittelten Abstandsinformation ein Höhenprofil (auch "Tiefenprofil" genannt), bzw. eine Topographie zu erstellen. Dies wird auch als "Topographiemessung" bezeichnet. Daraus lässt sich die Position bestimmen bzw. abschätzen, an der sich die tiefste Stelle der Dampfkapillare befindet. Fig. 2 zeigt beispielhaft ein gemessenes Tiefenprofil einer Dampfkapillare längs bzw. parallel zur Bearbeitungsrichtung (Fig. 2A) und quer zur Bearbeitungsrichtung des Laserstrahls (Fig. 2B). Darin ist jeweils die Dampfkapillare als Spitze oder Peak zu erkennen.

Während ein Höhenprofil erstellt bzw. eine Topographie gemessen wird, befindet sich der optische Messstrahl demnach zeitweise nicht an der tiefsten Stelle der Dampfkapillare. Infolgedessen können in dieser Zeit keine zuverlässigen Informationen über die Einschweißtiefe gesammelt werden. Durch hohe Abtastraten des optischen Kohärenztomographen (kHz bzw. MHz Bereich) und schnelle Strahlablenkeinheiten (z.B. Galvanoscanner) kann diese Zeit zwar klein gehalten werden, aber nicht auf null reduziert werden. Insbesondere wenn die Einschweißtiefe auf einen vorgegebenen Wert geregelt werden soll, ist es vorteilhaft, bzw. unabdingbar in konstanten bzw. möglichst kurzen Zeitabschnitten Informationen von der tiefsten Stelle der Dampfkapillare zu erhalten. Vorzugsweise soll also der optische Kohärenztomograph möglichst kontinuierlich bzw. unterbrechungsfrei die tiefste Stelle der Dampfkapillare vermessen. Dies bedeutet, dass für eine unterbrechungsfreie Einschweißtiefenmessung die Position der tiefsten Stelle der Dampfkapillare bekannt sein muss.

Eine Alternative zu der beschriebenen Erstellung eines Höhenprofils der Werkstückoberfläche mit Hilfe des optischen Kohärenztomographen ist das Aufstellen eines mathematischen Modells, mit dessen Hilfe die optimale Position des Messtrahls als Funktion der vorgegebenen Prozessparameter berechnet werden kann. Aufgrund der Vielzahl unterschiedlicher Schweißparameter ist ein solches Modell sehr komplex. Zudem erfordert ein solches Vorgehen einen großen Aufwand zum Aufstellen und Evaluieren des Modells anhand von Experimenten. Weiterhin löst dieser Ansatz nicht das Problem, dass z.B. bei einer Drift der Ablenkeinheit oder Ungenauigkeiten eine fehlerhafte Position des Messstrahls nicht erkannt wird.

Eine weitere Alternative ist die Verwendung eines zweiten optischen Kohärenztomographen. Der erste optische Kohärenztomograph tastet dabei die Werkstückoberfläche kontinuierlich ab, um ein Höhenprofil bzw. eine Topographie davon zu erstellen. Der zweite optische Kohärenztomograph misst permanent die Tiefe der Dampfkapillare. Allerdings müssen die beiden Tomographen zueinander kalibriert sein, und dürfen sich im Betrieb nicht relativ zueinander, z.B. aufgrund von Drift, verschieben, da sonst die Korrelation zwischen der Auftreffposition des ersten Tomographen und der gemessenen Tiefe des zweiten Tomographen nicht mehr gegeben ist. Aus Kostengründen ist diese Variante jedoch unwirtschaftlich. Alternativ hierzu könnte der Messstrahl eines optischen Kohärenztomographen in zwei Teilstrahlen aufgespalten werden, wobei die Teilstrahlen unabhängig voneinander einstellbar sind. Allerdings muss dann der zur Verfügung stehende Messbereich des optischen Kohärenztomographen auf zwei Bereiche aufgeteilt werden, da zeitgleich zwei Abstandsinformationen vorliegen. Somit reduziert sich der für die Einschweißtiefenmessung zur Verfügung stehende Messbereich. Weiterhin besteht auch bei diesen Alternativen das Problem, dass bei einer Drift die Position des Messtrahls, welcher die Tiefe der Dampfkapillare misst, nicht mehr exakt bekannt ist.

Die DE 10 2015 012565 B3 sowie die DE 198 52 302 A1 offenbaren derartige bekannte Laserbearbeitungssysteme und Verfahren.

### Zusammenfassung der Erfindung

Es ist also eine Aufgabe der vorliegenden Erfindung, ein Laserbearbeitungssystem und ein Verfahren zum Steuern eines Laserbearbeitungssystems anzugeben, das ermöglicht, eine Einschweißtiefe oder Tiefe einer Dampfkapillare sowie Informationen zu einer Position eines zur Messung der Tiefe einer Dampfkapillare eingesetzten optischen Messstrahls, vorzugsweise in Echtzeit oder kontinuierlich, zu ermitteln.

Diese Aufgabe wird durch den Gegenstand der unabhängigen Ansprüche gelöst. Vorteilhafte Ausgestaltungen und Weiterbildungen sind Gegenstand abhängiger Ansprüche.

Die Erfindung beruht auf dem Gedanken, mittels einer Bilderfassungseinheit sowohl eine durch einen Laser des Laserbearbeitungssystems in einem Werkstück erzeugte Dampfkapillare als auch den Auftreffort eines optischen Messstrahls einer optischen Messvorrichtung des Laserbearbeitungssystems zu erfassen. Beispielsweise kann die Bilderfassungseinheit Licht, welches von der Dampfkapillare emittiert bzw. reflektiert wird, und Licht des optischen Messstrahls, welches als Messfleck an dem Auftreffort auf dem Werkstück erscheint, erfassen und basierend darauf ein Bild erzeugen, das die Dampfkapillare und den Auftreffort des Messtrahls enthält.

Dadurch können für eine genaue und kontinuierliche Messung der Tiefe der Dampfkapillare, z.B. durch interferometrische Abstandsmessung, die Position des optischen Messstrahls und die Position der Dampfkapillare während eines Bearbeitungsprozesses, vorzugsweise in Echtzeit, bestimmt und eingestellt werden. Die Position des Messflecks kann darauf basierend auf einer idealen Position relativ zur Position der Dampfkapillare zur Messung der maximalen Tiefe der Dampfkapillare eingestellt werden. Eine Unterbrechung der Messung der Einschweißtiefe bzw. der Tiefe der Dampfkapillare durch die optische Messvorrichtung oder der Regelung der Messposition ist also nicht notwendig. Der Auftreffort des optischen Messtrahls auf dem Werkstück sowie dessen Ausrichtung auf eine geeignete Position zur Messung der Tiefe der Dampfkapillare kann somit zuverlässig, kostengünstig und einfach erfolgen.

Gemäß einem Aspekt der vorliegenden Offenbarung umfasst ein Laserbearbeitungssystem, bevorzugt ein Laserschweißsystem oder ein System zum Lasertiefschweißen: einen Laserbearbeitungskopf zum Einstrahlen eines Laserstrahls auf ein Werkstück, insbesondere auf eine Werkstückoberfläche, zur Erzeugung einer Dampfkapillare; eine optische Messvorrichtung zur Abstandsmessung, insbesondere zur Messung einer Tiefe der Dampfkapillare, mittels eines optischen Messstrahls; eine Bilderfassungseinheit, die eingerichtet ist, ein Bild von einem Bereich des Werkstücks bzw. der Werkstückoberfläche zu erfassen, der die Dampfkapillare und einen durch Einstrahlen des optischen Messstrahls erzeugten Messfleck umfasst, wobei das Laserbearbeitungssystem oder die Bilderfassungseinheit eingerichtet ist, basierend auf dem erfassten Bild eine Position des Messflecks und eine Position der Dampfkapillare zu bestimmen. Der Messfleck ist der Ort auf dem Werkstück, an dem der optische Messstrahl auftrifft, und kann auch als Auftreffpunkt oder Auftreffbereich des optischen Messstrahls bezeichnet werden.

Gemäß einem weiten Aspekt der vorliegenden Offenbarung umfasst ein Verfahren zum Steuern eines Laserbearbeitungssystems die folgenden Schritte: Einstrahlen des Laserstrahls auf eine Werkstückoberfläche zur Erzeugung einer Dampfkapillare; Einstrahlen eines optischen Messstrahls auf die Werkstückoberfläche zum Messen einer Tiefe der Dampfkapillare; Erfassen eines Bildes von einem Bereich der Werkstückoberfläche, der die Dampfkapillare und einen durch Einstrahlen des optischen Messstrahls erzeugten Messfleck umfasst; und Bestimmen, basierend auf dem erfassten Bild, einer Position des Messflecks und einer Position der Dampfkapillare. Das Verfahren kann insbesondere eingerichtet sein, ein Laserbearbeitungssystem gemäß Ausführungsformen dieser Offenbarung zu steuern. Ein Laserbearbeitungssystem gemäß Ausführungsformen dieser Offenbarung kann insbesondere dazu eingerichtet sein, ein Verfahren gemäß der Offenbarung durchzuführen.

Im Folgenden sind bevorzugte Aspekte der vorliegenden Offenbarung aufgeführt, die miteinander kombinierbar sind.

Die Bilderfassungseinheit kann am Laserbearbeitungskopf angebracht oder in demselben integriert sein. Bei der Bilderfassungseinheit kann es sich um eine Kamera oder digitale Kamera handeln, die dazu eingerichtet ist, Fotos von dem Werkstück, insbesondere von dem Bereich des Werkstücks, der die Dampfkapillare und den Auftreffort des optischen Messstrahls umfasst, aufzunehmen. Die digitale Kamera kann auch ein Video oder einen Videostream aufnehmen bzw. erzeugen.

Vorzugsweise ist die Bilderfassungseinheit koaxial am Laserbearbeitungskopf angeordnet. Dadurch können Parallaxenfehler bei der Bildauswertung vermieden werden. Zudem ermöglicht dies ein kompaktes und platzsparendes Design für das Laserbearbeitungssystem. Vorzugsweise verlaufen optische Achsen oder Strahlengänge der Bilderfassungseinheit und des Messstrahls zumindest teilweise parallel und/oder koaxial, vorzugsweise zumindest teilweise parallel und/oder koaxial im Laserbearbeitungskopf. Die Bilderfassungseinheit oder eine Kamera der Bilderfassungseinheit kann koaxial zu einem Strahlengang des Laserstrahls und/oder des Messstrahls angeordnet sein.

In einer Ausführungsform ist die Bilderfassungseinheit eingerichtet, thermische Strahlung, insbesondere Strahlung zwischen 950nm und 1700nm, zu erfassen. Thermische Strahlung wird durch die vom Laserstrahl erhitzte Oberfläche des Werkstücks und insbesondere von der Dampfkapillare emittiert. Die Bilderfassungseinheit kann demnach eine Infrarot-Kamera umfassen. Die Bilderfassungseinheit kann alternativ oder zusätzlich dazu eingerichtet sein, Licht des sichtbaren Spektralbereichs, bevorzugt Licht zwischen 300nm und 1100nm, insbesondere Licht zwischen 400nm und 800nm, zu detektieren.

Die Bilderfassungseinheit kann eine spektrale Empfindlichkeit im Wellenlängenbereich der durch die Dampfkapillare oder das Schmelzbad erzeugten thermischen Strahlung und/oder im Wellenlängenbereich des optischen Messtrahls aufweisen. Vorzugsweise ist die Bilderfassungseinheit in einem Wellenlängenbereich des Messtrahls besonders empfindlich. Dies führt zu einem stärkeren Kontrast im erfassten Bild zwischen dem Messfleck und der Werkstückoberfläche. Damit kann der Messfleck besonders einfach auf dem erfassten Bild dargestellt und anschließend ausgewertet werden. Insbesondere kann dadurch die Position des Messflecks besonders zuverlässig bestimmt werden.

Mittels geeigneter Auswertung des Bildes oder Videos, z.B. durch entsprechende Bildverarbeitung, kann zum einen die Position der Dampfkapillare auf dem Werkstück und die Geometrie der Dampfkapillare und/oder des Schmelzbades erkannt bzw. ermittelt werden. Beispielsweise kann eine Kontur des Schmelzbades erkannt werden. Ferner können geschmolzene Bereiche und/oder verfestigte Bereiche des Werkstücks erkannt bzw. unterschieden werden. Diese Erkennung kann mithilfe von Texturanalysen erfolgen. Zum anderen kann der Messfleck ermittelt werden. Insbesondere kann der geometrische Schwerpunkt des Messflecks und/oder der geometrische Schwerpunkt der Dampfkapillare bestimmt werden. Dies kann durch geeignete Bildverarbeitungsmethoden, beispielsweise Texturanalyse, Auswertung der Form des Schmelzbades etc., erfolgen. Somit kann die Position des Messflecks relativ zur Position der Dampfkapillare, vorzugsweise relativ zur tiefsten Stelle der Dampfkapillare, bestimmt werden. Die Auswertung kann durch die Bilderfassungseinheit selbst oder durch eine Recheneinheit des Laserbearbeitungssystems erfolgen. Die Auswertung des erfassten Bildes bzw. der erfassten Bilder kann im Wesentlichen in Echtzeit durchgeführt werden.

Infolge dessen kann das Laserbearbeitungssystem eingerichtet sein, den Messstrahl so zu regeln, dass er für die Messung der Einschweißtiefe stets korrekt, d.h. an der dafür optimalen Position auf dem Werkstück, ausgerichtet bzw. positioniert ist. Insbesondere kann die Position des Messtrahls relativ zur Position der Dampfkapillare und/oder der Position des Laserstrahls geregelt werden. Ferner kann die Fokuslage und/oder Ausrichtung des optischen Messtrahls geregelt werden. Die Regelung des Messstrahls kann in Echtzeit erfolgen. Des Weiteren kann anhand der Bildauswertung überprüft werden, ob der Messstrahl korrekt positioniert bzw. ausgerichtet ist.

Durch das Vorsehen der Bilderfassungseinheit und das Auswerten der von der Bilderfassungseinheit erfassten Bilder der Werkstückoberfläche kann die Position des Messflecks also kontinuierlich, d.h. ohne Unterbrechung, bestimmt und/oder eingestellt werden. Mit anderen Worten kann die Position des Messflecks stets zuverlässig und in Echtzeit ermittelt werden. Darüber hinaus ist keine zusätzliche optische Messvorrichtung erforderlich, sodass Kosten gespart werden.

Die optische Messvorrichtung kann eingerichtet sein, den optischen Messtrahl in die Dampfkapillare zu richten. Dadurch kann eine maximale Tiefe der Dampfkapillare bestimmt werden. Insbesondere kann anhand des Bildes eine Position der Dampfkapillare mit maximaler Tiefe ermittelt bzw. geschätzt werden. In der Regel ist die tiefste Stelle der Dampfkapillare in Bearbeitungsrichtung am rückwärtigen Rand der Dampfkapillare gelegen. Wird in diesem Fall der Messstrahl derart gesteuert, dass er auf diese Position gerichtet ist, kann eine maximale Tiefe der Dampfkapillare bestimmt werden.

Das Laserbearbeitungssystem oder die optische Messvorrichtung kann ferner eine Einstellvorrichtung aufweisen, die eingerichtet ist, den optischen Messtrahl einzustellen oder auszurichten. Die Einstellvorrichtung kann beispielsweise eine Strahlablenkeinheit, beispielsweise Spiegel oder Galvanoscanner umfassen und kann von einer Recheneinheit des Laserbearbeitungssystems oder der optischen Messvorrichtung gesteuert werden.

Vorzugsweise weist die Bilderfassungseinheit einen Notch-Filter auf, der eingerichtet ist, einen Wellenlängenbereich des Laserstrahls zu filtern bzw. zu blockieren. Dadurch wird sichergestellt, dass die Bilderfassungseinheit aufgrund der im Vergleich zur Lichtleistung des optischen Messstrahls und der Dampfkapillare hohen Lichtleistung des Laserstrahls nicht übersteuert. Darüber hinaus kann Licht, welches von der Dampfkapillare emittiert bzw. reflektiert wird, und Licht des Messstrahls, welches vom Werkstück reflektiert wird, zuverlässig von der Bilderfassungseinheit detektiert werden, ohne dass es vom Licht des Laserstrahls überlagert wird.

Vorzugsweise umfasst die Messvorrichtung einen optischen Kohärenztomographen. Vorzugsweise umfasst die Bilderfassungseinheit eine Kamera, etwa eine CCD-Kamera und/oder eine CMOS-Kamera und/oder eine Infrarot-Kamera.

Gemäß einer Ausführungsform ist eine Beleuchtungseinheit am Laserbearbeitungskopf zum Beleuchten des erfassten Bereichs der Werkstückoberfläche, z.B. mittels sichtbaren Lichts und/oder Infrarot-Lichts, vorgesehen. Dadurch kann die Auswertung des von der Bilderfassungseinheit erfassten Bildes des Werkstückbereichs verbessert oder vereinfacht werden, da sich beispielsweise die Dampfkapillare vom Hintergrund stärker abhebt und somit besser sichtbar ist. Zudem kann der Wellenlängenbereich des Lichts, welches von der Dampfkapillare reflektiert wird, an den Wellenlängenbereich des Lichts, in dem die Bilderfassungseinheit empfindlich ist, (sogenannte "spektrale Empfindlichkeit") angepasst werden.

Die Beleuchtungseinheit kann eingerichtet sein, Licht in den Strahlengang des Laserstrahls und/oder des optischen Messstrahls und/oder der Bilderfassungseinheit einzukoppeln. Dadurch kann das Licht der Beleuchtungseinheit auf demselben Weg bzw. auf dieselbe Weise wie der Laserstrahl bzw. der optische Messstrahl auf das Werkstück gelenkt werden. Mit anderen Worten läuft das Licht der Beleuchtungseinheit zumindest streckenweise innerhalb des Bearbeitungskopfes des Laserbearbeitungssystems. Demnach kann eine Anpassung des Laserbearbeitungskopfes bzw. eines Endabschnitt des Laserbearbeitungskopfes an die Beleuchtungseinheit vermieden werden.

Das Laserbearbeitungssystem bzw. die optische Messvorrichtung kann eine Visualisierungseinheit aufweisen, die eingerichtet ist, einen Visualisierungsstrahl zur Visualisierung des Auftreffpunkts des optisches Messstrahls zu erzeugen und in den Strahlengang des Messtrahls einzukoppeln. Ein durch das Einstrahlen des Visualisierungsstrahls erzeugter Visualisierungsfleck ist vorzugsweise konzentrisch mit dem Messfleck. Eine Wellenlänge des Visualisierungsstrahls kann an die spektrale Empfindlichkeit der Bilderfassungseinheit angepasst sein. Zudem kann die Leistung des Visualisierungsstrahls gezielt und unabhängig von der Leistung des optischen Messtrahls ausgewählt bzw. eingestellt werden. Dadurch kann insbesondere ein Visualisierungsstrahl mit einer deutlich höheren Leistung als die Leistung des optischen Messstrahls gewählt werden. Zudem kann die Wellenlänge des Visualisierungsstrahls derart ausgewählt bzw. eingestellt werden, dass reflektiertes Licht des Visualisierungsstrahls den Notch-Filter der Bilderfassungseinheit möglichst unbeeinträchtigt passiert. Mit anderen Worten kann die Wellenlänge des Visualisierungsstrahls derart gewählt werden, dass der Notch-Filter für den Visualisierungsstrahl im Wesentlichen transparent ist. Da der Messfleck und der Visualisierungsfleck konzentrisch sind, kann basierend auf der Position des Visualisierungsflecks in dem erfassten Bild die Position des Messflecks ermittelt werden. Vorzugsweise weist der Visualisierungsstrahl eine Wellenlänge auf, die von der Wellenlänge des Laserstrahls verschieden ist.

Der Visualisierungsstrahl kann mittels eines Faserkopplers in eine Lichtleitfaser der optischen Messvorrichtung eingekoppelt werden, in der der optische Messstrahl geleitet wird. Mit anderen Worten wird der Visualisierungsstrahl zumindest streckenweise in einer Lichtleitfaser der optischen Messvorrichtung eingekoppelt, d.h. bereits an einen Punkt, bevor der Messstrahl in den Laserbearbeitungskopf eingeführt wird. Da der Visualisierungsstrahl bereits in die Lichtleitfaser der optischen Messvorrichtung eingekoppelt wird, wird der Visualisierungsstrahl auf dieselbe Position auf dem Werkstück wie der Messstrahl abgebildet. Es kann also ein lateraler Versatz zwischen der Position des Visualisierungsflecks und des Messflecks aufgrund von Justagefehlern, Drift von Ablenkeinheiten oder sonstigen Ungenauigkeiten im Bearbeitungskopf des Laserbearbeitungssystems vermieden werden.

Bevorzugt ist eine Wellenlänge des Visualisierungsstrahls kleiner als eine Wellenlänge des Messstrahls. Dadurch können Verluste der Lichtleistung des Visualisierungsstrahls beim Einkoppeln in die Lichtleitfaser der optischen Messvorrichtung vermieden werden. Es kann also eine Monomode-Faser für die Wellenlänge des Messstrahls verwendet werden.

Gemäß einer Ausführungsform umfasst das Laserbearbeitungssystem ferner eine Recheneinheit. Die Recheneinheit kann eine Steuereinheit des Laserbearbeitungssystems zum Steuern desselben umfassen oder sein. Die Recheneinheit kann eingerichtet sein, eine oder mehrere Funktionen der Bilderfassungseinheit und/oder der optischen Messvorrichtung auszuführen. Insbesondere kann die Recheneinheit eingerichtet sein, das von der Bilderfassungseinheit erfasste Bild wie vorstehend beschrieben auszuwerten, oder basierend auf dem von der Bilderfassungseinheit erfassten Bild eine Position des Messflecks und/oder eine Position der Dampfkapillare zu bestimmen. Ferner kann die Recheneinheit eingerichtet sein, eine Position des optischen Messtrahls bzw. eine Position des Messflecks relativ zur Dampfkapillare einzustellen bzw. zu regeln. Die Recheneinheit kann eingerichtet sein, ein Verfahren gemäß der Offenbarung auszuführen.

Vorzugsweise wird die Position des Messflecks relativ zur Position der Dampfkapillare in Echtzeit geregelt und kontinuierlich eine maximale Tiefe der Dampfkapillare bestimmt.

### Kurze Beschreibung der Zeichnungen

Ausführungsbeispiele der Offenbarung sind in den Figuren dargestellt und werden im Folgenden näher beschrieben. Es zeigen:
Figur 1 eine schematische Querschnittsansicht eines Werkstücks;
Figuren 2A und 2B beispielhafte Messungen eines Tiefenprofils eines Werkstücks;
Figur 3 eine schematische Ansicht eines Laserbearbeitungssystems gemäß einer ersten Ausführungsform der Erfindung;
Figur 4 eine schematische Ansicht eines Bildes, welches von einer Bilderfassungseinheit eines Laserbearbeitungssystems gemäß Ausführungsformen aufgenommen ist;
Figuren 5A und 5B zeigen schematische Ansichten eines Laserbearbeitungssystems gemäß weiteren Ausführungsformen der vorliegenden Erfindung;
Figur 6 eine schematische Ansicht eines Laserbearbeitungssystems gemäß einer zweiten Ausführungsform der vorliegenden Erfindung;
Figur 7 ein Blockdiagramm, welches ein Verfahren zum Bearbeiten eines Werkstücks mittels eines Laserstrahls gemäß einer Ausführungsform der vorliegenden Erfindung veranschaulicht.

### Detaillierte Beschreibung

In der folgenden detaillierten Beschreibung bezeichnen gleiche Bezugszeichen gleiche oder einander entsprechende Elemente.

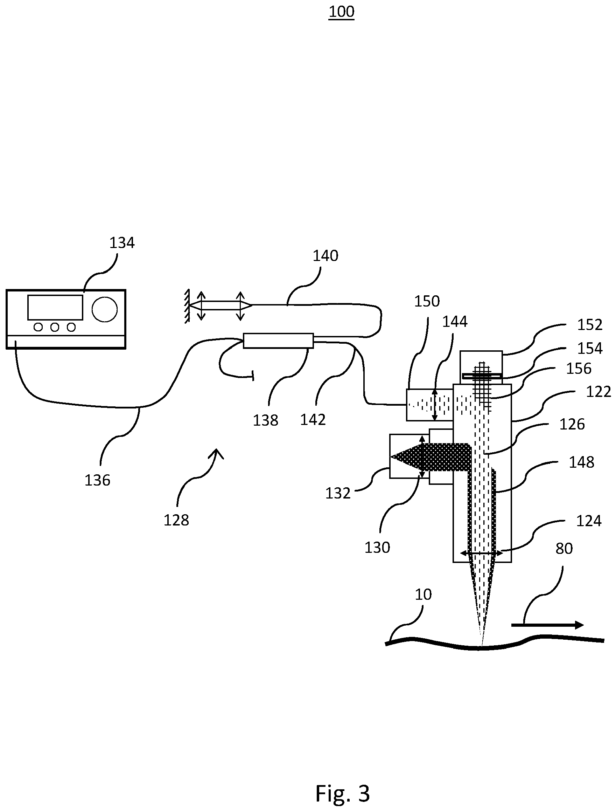

Fig. 3 ist eine schematische Ansicht eines Laserbearbeitungssystems 100 gemäß einer ersten Ausführungsform der vorliegenden Erfindung. Das Laserbearbeitungssystem 100 umfasst einen Bearbeitungskopf 122, beispielsweise einen Laserschweißkopf oder einen Laserschneidkopf.

Das Laserbearbeitungssystem 100 umfasst ferner eine Laservorrichtung (nicht gezeigt) zum Bereitstellen eines Laserstrahls 148 (auch als "Bearbeitungsstrahl" oder "Bearbeitungslaserstrahl" bezeichnet) und eine optische Messvorrichtung 128 eingerichtet zur interferometrischen Abstandsmessung mittels eines optischen Messtrahls 126. Beispielsweise wird ein Abstand zwischen einem zu bearbeitenden Werkstück 10 und einem Endabschnitt des Bearbeitungskopfes 122, beispielsweise einer Düse oder eines Crossjets, gemessen. Der Endabschnitt, bzw. die Düse oder Crossjet, weist eine Öffnung auf, durch die der Laserstrahl 148, optional zusammen mit einem Prozessgas, aus dem Bearbeitungskopf 122 austritt.

Das Laserbearbeitungssystem 100 oder Teile davon, beispielsweise der Bearbeitungskopf 122, kann entlang zumindest einer Bearbeitungsrichtung 80 bewegbar sein. Die Bearbeitungsrichtung 80 kann eine Schneid- bzw. Schweißrichtung und/oder eine Bewegungsrichtung des Laserbearbeitungssystems 100, wie beispielsweise des Bearbeitungskopfes 122, bezüglich des Werkstücks 10 sein. Insbesondere kann die Bearbeitungsrichtung 80 eine horizontale Richtung sein. Die Bearbeitungsrichtung 80 kann auch eine bezüglich einer Oberfläche des zu bearbeitenden Werkstücks 10 laterale Richtung sein. Die Bearbeitungsrichtung 80 kann auch als "Vorschubrichtung" bezeichnet werden.

Das Laserbearbeitungssystem 100 kann eine Kollimator-Optik 130 zur Kollimation des Laserstrahls 148 aufweisen. Innerhalb des Bearbeitungskopfes 122 kann der Laserstrahl 148 durch eine geeignete Optik (nicht gezeigt) um etwa 90° in Richtung des Werkstücks 10 abgelenkt bzw. reflektiert werden. Die Optik, beispielsweise ein halbdurchlässiger Spiegel, kann dazu eingerichtet sein, beispielsweise vom Werkstück 10 zurückreflektiertes Licht, wie beispielsweise Licht des Messtrahls 126 oder von einer später beschriebenen Beleuchtungseinheit oder Visualisierungseinheit, zur Messvorrichtung 128 durchtreten zu lassen. Die Kollimator-Optik 130 kann in den Bearbeitungskopf 122 integriert sein. Beispielsweise kann der Bearbeitungskopf 122 ein Kollimatormodul 132 umfassen, das in den Bearbeitungskopf 122 integriert oder am Bearbeitungskopf 122 montiert ist.

Die optische Messvorrichtung 128 kann einen Kohärenztomographen umfassen oder kann ein Kohärenztomograph sein. Der Kohärenztomograph kann eine Auswerteeinheit 134 mit einer breitbandigen Lichtquelle (z.B. einer Superlumineszenzdiode, kurz "SLD") umfassen, die das Messlicht in einen Lichtwellenleiter 136 koppelt. In einem Strahlteiler, der vorzugsweise einen Faserkoppler 138 aufweist, wird das Messlicht typischerweise in einen Referenzarm 140 und einen Messarm aufgespalten, der über einen Lichtwellenleiter 142 in den Bearbeitungskopf 122 führt. Die optische Messvorrichtung 128 kann ferner eine Kollimator-Optik 144 umfassen, die eingerichtet ist, einen optischen Messstrahl 126 zu kollimieren. Die Kollimator-Optik 144 kann in den Bearbeitungskopf 122 integriert sein. Beispielsweise kann der Bearbeitungskopf 122 ein Kollimatormodul 150 umfassen, das in den Bearbeitungskopf 122 integriert oder am Bearbeitungskopf 122 montiert ist.

Im Bearbeitungskopf 122 ist ferner eine Fokussier-Optik 124 vorgesehen, die eingerichtet ist, um den Laserstrahl 148 und/oder den optischen Messstrahl 126 auf das Werkstück 10 zu fokussieren. Die Fokussier-Optik 124 kann eine gemeinsame Fokussier-Optik, wie beispielsweise eine Fokuslinse, für den Laserstrahl 148 und den Messstrahl 126 sein.

In einigen Ausführungsformen können der Laserstrahl 148 und der optische Messstrahl 126 zumindest streckenweise parallel oder sogar koaxial verlaufen, und können insbesondere zumindest streckenweise koaxial überlagert sein. Beispielsweise kann die optische Messvorrichtung 128 eingerichtet sein, den optischen Messstrahl 126 in einen Strahlengang der Laservorrichtung 100 einzukoppeln. Die Zusammenführung des optischen Messstrahls 126 und des Laserstrahls 148 kann nach der Kollimator-Optik 144 und vor der Fokussier-Optik 124 erfolgen. Alternativ können die Strahlengänge des Messstrahls 126 und des Laserstrahls 148 weitgehend getrennt geführt und erst nach der Fokussier-Optik 124 vor der Öffnung des Laserbearbeitungskopfes 122 zusammengeführt werden. Die Strahlachsen des Laserstrahls 148 und des Messstrahls 126 können auf Höhe der Öffnung bzw. des Endabschnitts des Laserbearbeitungskopfes 122 parallel zueinander oder sogar koaxial verlaufen, und stehen bevorzugt im Wesentlichen senkrecht auf der Oberfläche des Werkstücks 10. In diesem Fall kann jeweils eine separate Fokuslinse für den Messstrahl 126 und für den Laserstrahl 148 vorgesehen sein, damit beide Strahlen auf das Werkstück 10 fokussiert werden können.

Das hier beschriebene Prinzip zur Abstandsmessung beruht auf dem Prinzip der optischen Kohärenztomographie, die sich unter Zuhilfenahme eines Interferometers die Kohärenzeigenschaften von Licht zunutze macht. Zur Abstandsmessung wird der optische Messstrahl 126 auf eine Oberfläche des Werkstücks 10 gelenkt. Das von der Oberfläche zurückreflektierte Licht des Messstrahls wird auf die Austritts-/Eintrittsfläche des Lichtwellenleiters 142 abgebildet, im Faserkoppler 138 mit dem zurückreflektierten Licht aus dem Referenzarm 140 überlagert und anschließend zurück in die Auswerteeinheit 134 gelenkt. Das überlagerte Licht enthält Informationen über den Weglängenunterschied zwischen dem Referenzarm 140 und dem Messarm. Diese Informationen werden in der Auswerteeinheit 134 ausgewertet, wodurch der Benutzer beispielsweise Informationen über den Abstand zwischen der Oberfläche des Werkstücks und dem Bearbeitungskopf 122 oder über eine Tiefe einer Dampfkapillare erhält.

Zur Bestimmung der Tiefe der Dampfkapillare wird der optische Messstrahl 126 in die Dampfkapillare gerichtet und in der Dampfkapillare zurück zur Messvorrichtung 128 reflektiert. Zusätzlich kann ein Abstand zur Werkstückoberfläche 16 bzw. eine Position der Werkstückoberfläche bekannt sein. Somit kann die Messvorrichtung 128 bzw. die Auswerteeinheit 134 eine Tiefe der Dampfkapillare, d.h. den Abstand eines reflektierenden Bodens der Dampfkapillare zur Oberfläche 16 des Werkstücks 10, basierend auf dem reflektierten Messlicht bestimmen. Für eine genaue Bestimmung der Tiefe der Dampfkapillare muss jedoch der Messtrahl 126 auf den tiefsten Punkt der Dampfkapillare gerichtet werden.

Die Laserbearbeitungsvorrichtung 100 umfasst ferner eine Bilderfassungseinheit 152, beispielsweise eine Kamera. Die Bilderfassungseinheit 152 kann wie in Fig. 3 gezeigt koaxial am Laserbearbeitungskopf 122 angeordnet sein, oder kann koaxial im Laserbearbeitungskopf 122 integriert sein. Ein Strahlengang 156 der Bilderfassungseinheit 152 verläuft zumindest streckenweise durch den Bearbeitungskopf 122, sodass die Bilderfassungseinheit 152 ein Bild des Bearbeitungsbereichs des Werkstücks 10, insbesondere einen Bereich des Werkstücks 10, der die Dampfkapillare 12 und den Messfleck umfasst, erfassen kann. In einigen Ausführungsformen können eine optische Achse der Bilderfassungseinheit 152 und der optische Messstrahl 126 zumindest streckenweise parallel verlaufen, oder können insbesondere zumindest streckenweise koaxial überlagert sein. Mit anderen Worten kann die Bilderfassungseinheit 152 eine koaxiale Kamera umfassen.

Die Bilderfassungseinheit 152 ist eingerichtet, von dem zu bearbeitenden Werkstück 10 reflektiertes Licht bzw. elektromagnetische Strahlung bzw. von dem zu bearbeitenden Werkstück 10 emittiertes Licht bzw. elektromagnetische Strahlung zu detektieren und basierend darauf ein Bild des Werkstücks 10, insbesondere ein Bild eines Bereichs der Oberfläche des Werkstücks 10 zu erfassen bzw. zu erzeugen. Zu dem emittierten Licht bzw. zu der emittierten elektromagnetischen Strahlung zählt beispielsweise von der Dampfkapillare oder Schmelzbad emittierte thermische Strahlung, die aufgrund der erhöhten Temperatur des Materials des Werkstücks 10 entsteht. Zu dem reflektierten Licht bzw. der reflektierten elektromagnetischen Strahlung zählt beispielsweise Licht des Messstrahls 126, welches von der Oberfläche des Werkstücks 10 oder dem Boden der Dampfkapillare reflektiert wird.

Die Bilderfassungseinheit 152 ist insbesondere eingerichtet, ein Bild eines Bereichs der Oberfläche des zu bearbeitenden Werkstücks 10 zu erfassen, der die Dampfkapillare und den Auftreffpunkt bzw. Messfleck des Messstrahls 126 umfasst. Der Bereich kann ferner das Schmelzbad umfassen. Die Bilderfassungseinheit 152 kann eingerichtet sein, in regelmäßigen zeitlichen Abständen oder kontinuierlich ein Bild des Bereichs zu erfassen. Die Bilderfassungseinheit 152 kann ein Video oder einen Videostream des Bereichs erfassen. Durch die Erfassung der Dampfkapillare kann anhand des Bildes eine ideale Stelle der Dampfkapillare für die Messung der Tiefe der Dampfkapillare, die in etwa der tiefsten Stelle der Dampfkapillare entspricht, ermittelt werden. Da der Messstrahl 126 ebenfalls im Bild erfasst ist, kann er für die Tiefenmessung auf die tiefste Stelle der Dampfkapillare ausgerichtet werden, oder es kann überprüft werden, ob der Messstrahl 126 auf die tiefste Stelle gerichtet ist.

Die Bilderfassungseinheit 152 bzw. die Kamera kann eingerichtet sein, thermische Strahlung, d.h. Infrarotlicht, und/oder Licht des sichtbaren Spektralbereichs zu erfassen. Für die Erfassung der Dampfkapillare können beispielsweise Silizium-basierte Kamerachips (beispielsweise CCD, CMOS) verwendet werden, die in einem Wellenlängenbereich von ca. 300nm bis 1100 nm sensitiv sind, oder InGaAs-basierte Kamerachips, die im Wellenlängenbereich von ca. 950 nm bis 1700 nm sensitiv sind. Ein Wellenlängenbereich der Laseremission wird vorzugsweise geblockt, da andernfalls Gefahr einer Übersteuerung des Kamerabildes durch die Laserstrahlung besteht, die in der Regel einige Kilowatt aufweist.

Damit der Auftreffort des optischen Messstrahls 126 erfasst werden kann, ist die Bilderfassungseinheit 152 bzw. die Kamera im Wellenlängenbereich des Lichts des Messstrahls 126 sensitiv. Typische Wellenlängen bzw. Wellenlängenbereiche für einen optischen Kohärenztomographen auf Basis der sogenannten Fourier-Domain-OCT sind 800nm bis 900nm, 1000nm bis 1100nm, 1310nm oder 1550nm. Weitere Emissionswellenlängen sind möglich.

Die Bilderfassungseinheit 152 kann ferner einen sogenannten Notch-Filter 154 aufweisen. Der Notch-Filter 154 ist eingerichtet, den Bearbeitungslaser, insbesondere reflektiertes Licht des Laserstrahls 148, zu blockieren, um eine Übersteuerung des erfassten Bildes zu vermeiden. Außerdem kann mithilfe des Notch-Filters 154 sichergestellt werden, dass die Dampfkapillare und der Messfleck des optischen Messstrahls 126 deutlich auf dem erfassten Bild erkennbar sind und nicht durch das Licht des Laserstrahls 148 überlagert werden.

Typische Bearbeitungslaser emittieren schmalbandig im Wellenlängenbereich von 1030nm bis 1070nm, beispielsweise bei 1030 nm, 1064 nm oder 1070 nm. Weitere Emissionswellenlängen sind möglich. Der Notch-Filter sollte also dahingehend ausgelegt oder optimiert sein, die Wellenlänge bzw. den Wellenlängenbereich des Lichts des Laserstrahls 148 heraus zu filtern und nicht zur Bilderfassungseinheit 152 durchzulassen.

Andererseits sollte die Wellenlänge oder der Wellenlängenbereich des optischen Messtrahls 126 derart gewählt werden, dass dieser nicht vom Notch-Filter 154 gefiltert bzw. blockiert wird. Demnach ist die Wellenlänge oder der Wellenlängenbereich des optischen Messstrahls 126 vorzugsweise von der Wellenlänge oder dem Wellenlängenbereich des Lichts des Laserstrahls 148 verschieden. Der Notch-Filter 154 kann zudem dahingehend ausgelegt sein, nicht nur für den Wellenlängenbereich des Messtrahls 126, sondern auch für den sichtbaren Spektralbereich oder den Infrarotbereich transparent zu sein, sodass die Bilderfassungseinheit 152 die Dampfkapillare basierend auf der thermischen Strahlung im Infrarotbereich oder basierend auf sichtbarem Licht erfassen kann. Alternativ zum Notch-Filter 154 kann die Bilderfassungseinheit 152 auch dahingehend eingerichtet sein, für den Wellenlängenbereich des Laserstrahls 148 nicht empfindlich zu sein.

Damit der Auftreffort des optischen Messstrahls 126 im Bild sichtbar ist, muss die Intensität des Messflecks auf dem Werkstück hoch genug sein, um sie mit der Bilderfassungseinheit 152 zu erfassen. Insbesondere wenn der Messstrahl in die Öffnung der Dampfkapillare gerichtet wird, reduziert sich der Anteil, der in die Bilderfassungseinheit 152 bzw. in die Kamera zurück reflektiert oder gestreut wird, erheblich. Dann erfolgt lediglich Streuung bzw. Reflektion an Seitenwänden der Dampfkapillare oder an Partikeln, die sich im Bereich der Öffnung der Dampfkapillare befinden. Emittieren die Laservorrichtung und der optische Kohärenztomograph bei ähnlichen Wellenlängen (z.B. OCT bei 1030nm und Laser bei 1070nm), so steigen die Anforderungen an den Notch-Filter erheblich, da er den Laser vollständig um mehrere Größenordnungen unterdrücken muss, die Wellenlänge des OCT aber vollständig transmittieren muss.

Wird der optische Kohärenztomograph mit kommerziell erhältlichen Superlumineszenzdioden (SLD) betrieben, so stehen in der Regel einige zehn bzw. einige hundert Milliwatt an Lichtleistung zur Verfügung. Im Vergleich zu mehreren Kilowatt Lichtleistung bei dem Bearbeitungslaser ist die Leistung der SLD sehr gering.

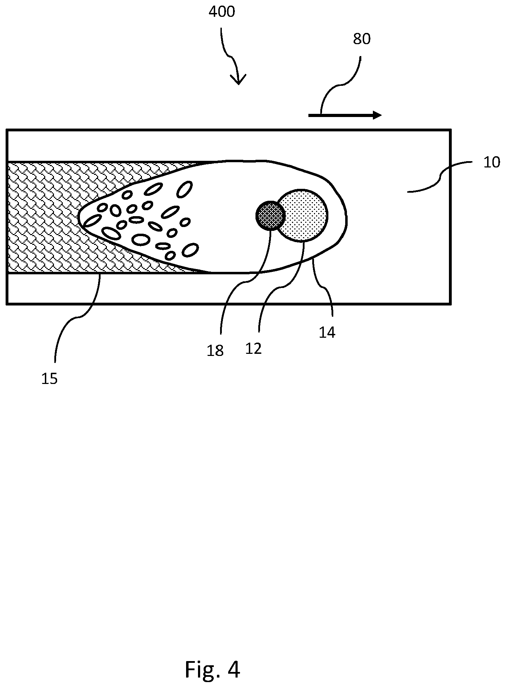

Figur 4 zeigt beispielhaft ein Bild 400, wie es von der Bilderfassungseinheit gemäß Ausführungsformen der vorliegenden Erfindung erfasst bzw. erzeugt werden kann.

Das Bild 400 kann als digitales Bild bzw. Foto erfasst bzw. erzeugt werden. Das Bild kann eine Mehrzahl von Pixeln aufweisen.

Das Bild 400 ist eine Draufsicht eines Bereichs bzw. Ausschnitts eines Werkstücks 10, welches von einem Laserbearbeitungssystem gemäß Ausführungsformen der vorliegenden Erfindung bearbeitet wird. Das Bild 400 ist während eines Laserbearbeitungsprozesses aufgenommen, welcher von dem Laserbearbeitungssystem gemäß Ausführungsformen der vorliegenden Erfindung durchgeführt wird. In Fig. 4 ist die Bearbeitungsrichtung 80 des Laserbearbeitungsprozesses mit einem Pfeil angedeutet.

Das Bild 400 zeigt den Bereich bzw. Ausschnitt des Werkstücks 10, welcher die Dampfkapillare 12, das die Dampfkapillare 12 umgebende Schmelzbad 14 und die dem Schmelzbad 14 nachgelagerte Nahtoberraupe 15 umfasst, in Draufsicht, d.h. aus Sicht der Bilderfassungseinheit 152.

Außerdem enthält das Bild 400 den Messfleck 18, der durch das Auftreffen des optischen Messstrahls 126 auf eine Oberfläche entsteht. Wie in Fig. 4 zu erkennen ist, hat der Messfleck 18 eine runde Form. Der Messfleck 18 kann aber auch eine ovale oder kreisähnliche Form aufweisen, je nach Auftreffwinkel auf die Oberfläche. Da sich der tiefste Punkt der Dampfkapillare 12 an seinem in Bearbeitungsrichtung rückwärtigen Rand befindet (vgl. Fig. 1), muss der optische Messstrahl 126 entsprechend auf diesen Punkt ausgerichtet werden, um die Tiefe der Dampfkapillare korrekt bestimmen zu können. Die optische Messvorrichtung kann eine Steuerung umfassen, die eingerichtet ist, die Ausrichtung des optischen Messstrahls 126 auf den tiefsten Punkt der Dampfkapillare 12 basierend auf den von der Bilderfassungseinheit 152 erfassten Daten zu regeln.

Das Laserbearbeitungssystem oder die Bilderfassungseinheit selbst kann eingerichtet sein, eine Bildauswertung nahezu in Echtzeit auszuführen, um in dem von der Bilderfassungseinheit erfassten Bild die Position der Dampfkapillare 12 auf dem Werkstück und die Position des Messflecks 18 zu bestimmen. Zum Beispiel kann der geometrische Schwerpunkt des Messflecks und/oder der geometrische Schwerpunkt der Dampfkapillare in der Bildauswertung bestimmt werden. Somit kann die Position des Messflecks relativ zur Position der Dampfkapillare, vorzugsweise relativ zur tiefsten Stelle der Dampfkapillare, bestimmt werden. Neben der Messung der Tiefe der Dampfkapillare kann auch eine Umgebung der Dampfkapillare 12 erfasst und beispielsweise eine sogenannte Topographiemessung durchgeführt werden. Hiermit kann eine Naht unmittelbar vor dem Schweißprozess gefunden werden oder es kann unmittelbar nach dem Schweißprozess die Qualität der Nahtoberraupe 15 vermessen werden. Außerdem kann eine Geometrie der Dampfkapillare und/oder des Schmelzbades bestimmt werden. Beispielsweise kann eine Kontur des Schmelzbades erkannt werden. Ferner können geschmolzene Bereiche und/oder verfestigte Bereiche des Werkstücks erkannt bzw. unterschieden werden. Dies kann durch geeignete Bildverarbeitungsmethoden, beispielsweise Filtern, Texturanalyse, Auswertung der Form des Schmelzbades etc., erfolgen.

Ferner kann das Laserbearbeitungssystem oder die optische Messvorrichtung eingerichtet sein, basierend auf der Bestimmung der Position des Messflecks bzw. des Messstrahls und der Position der Dampfkapillare eine Position des Messstrahls 126 so zu regeln, dass er für die Messung der Einschweißtiefe stets korrekt ausgerichtet bzw. positioniert ist. Insbesondere kann die Position des Messstrahls relativ zur Position der Dampfkapillare und/oder der Position des Laserstrahls geregelt werden. Die Position des Messstrahls kann beispielsweise durch Strahlablenkeinheiten, z.B. Spiegel, Galvanoscanner oder die oben beschriebenen Kollimator-Optiken, eingestellt werden. Zusätzlich kann die Fokuslage und/oder Ausrichtung des optischen Messstrahls geregelt werden. Die Regelung des Messstrahls kann insbesondere in Echtzeit erfolgen.

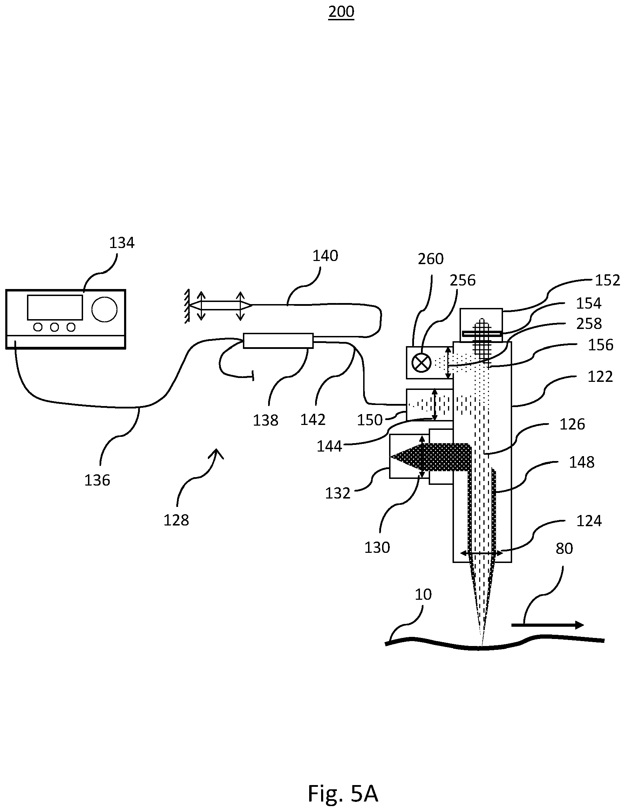

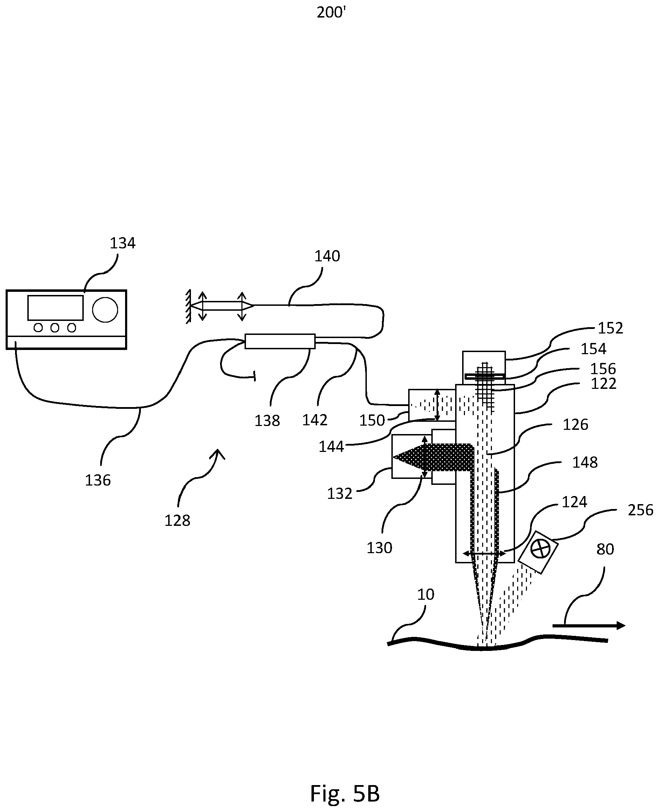

Figuren 5A und 5B zeigen Laserbearbeitungssysteme 200 und 200' gemäß weiteren Ausführungsformen der vorliegenden Erfindung.

Das Laserbearbeitungssystem 200 entspricht dem Laserbearbeitungssystem 100, welches vorstehend in Bezug auf Fig. 3 beschrieben ist, jedoch mit einer Beleuchtungseinheit 256 zur Beleuchtung des Bearbeitungsbereichs, d.h. des Bereichs der Werkstückoberfläche 16, der die Dampfkapillare 12 (sowie optional das Schmelzbad 14) und den Messfleck 18 umfasst. Wird der sichtbare Spektralbereich von der Bilderfassungseinheit 152 erfasst, kann eine Beleuchtung der Bearbeitungszone durch eine Beleuchtungseinheit 256 erforderlich sein. Die Bilderfassungseinheit 152 des Laserbearbeitungssystems 200 ist dann vorzugsweise eingerichtet, Licht des sichtbaren Spektralbereichs zu detektieren. Die Beleuchtung kann entweder koaxial durch den Bearbeitungskopf 122 erfolgen, wie in Fig. 5A dargestellt. Alternativ kann die Beleuchtungseinheit seitlich, also extern wie in Fig. 5B gezeigt, am Bearbeitungskopf angeordnet sein.

Die Beleuchtungseinheit 256 kann am Laserbearbeitungskopf 122 angeordnet oder in den Bearbeitungskopf 122 integriert sein. Die Beleuchtungseinheit 256 ist vorgesehen, um eine Abbildung des Bereichs der Werkstückoberfläche 16 mit der Dampfkapillare und dem Auftreffort des Messstrahls (dem Messfleck 18) durch die Bilderfassungseinheit 152 zu verbessern. Die Beleuchtungseinheit 256 ist vorzugsweise eingerichtet, sichtbares Licht zu emittieren und damit den von der Bilderfassungseinheit 152 erfassten Bereich zu beleuchten. Da insbesondere die Dampfkapillare 12 und das Schmelzbad 14 nur eine geringe Menge Licht im sichtbaren Spektralbereich emittieren, kann die Beleuchtung durch die Beleuchtungseinheit 256 deren Erkennbarkeit auf dem von der Bilderfassungseinheit 152 erfassten Bild erhöhen. Die Beleuchtung könnte alternativ auch im infraroten Spektralbereich emittieren, insbesondere bei der Verwendung einer Infrarotkamera.

Beispielsweise kann der Bearbeitungskopf 122, wie in Fig. 5A gezeigt, ein Beleuchtungsmodul 260 umfassen, das in den Bearbeitungskopf 122 integriert oder am Bearbeitungskopf 122 montiert ist. Das von der Beleuchtungseinheit 256 emittierte Licht kann in den Strahlengang des Laserstrahls 148 und/oder des optischen Messstrahls 126 und/oder der Bilderfassungseinheit 152 eingekoppelt werden. Weiterhin kann das Beleuchtungsmodul 260 eine Kollimationsoptik 258 zum Kollimieren des von der Beleuchtungseinheit 256 in den Strahlengang emittierten Lichts umfassen.

Gemäß der in Fig. 5B veranschaulichten Ausführungsform ist die Beleuchtungseinheit 256 hingegen derart am Laserbearbeitungskopf 200 angeordnet, dass das von ihr emittierte Licht direkt auf den Bearbeitungsbereich, insbesondere den Bereich des Werkstücks, welcher die Dampfkapillare und/oder das Schmelzbad umfasst, trifft. Mit anderen Worten verläuft das von der Beleuchtungseinheit 256 emittierte Licht außerhalb des Strahlengangs des Messstrahls 126 und des Laserstrahls 148, also nicht durch den Bearbeitungskopf 122.

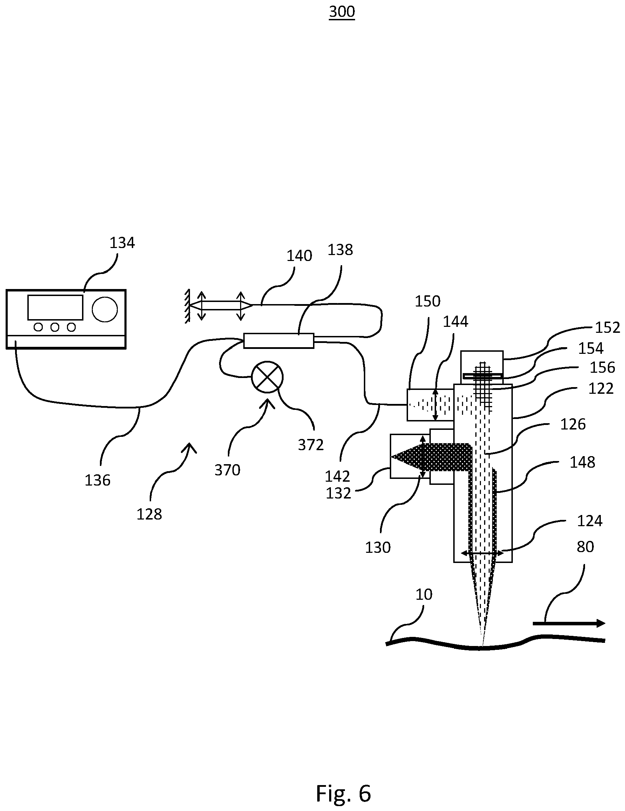

Figur 6 zeigt ein Laserbearbeitungssystem 300 gemäß einer zweiten Ausführungsform der Erfindung.

Das Laserbearbeitungssystem 300 entspricht dem Laserbearbeitungssystem 100, welches vorstehend in Bezug auf Fig. 3 beschrieben ist, jedoch mit einer Visualisierungseinheit 370 zur Visualisierung des optischen Messstrahls 126 bzw. des Messflecks 18. Die Visualisierungseinheit 370 kann eine Lichtquelle 372 aufweisen, die eingerichtet ist, einen Visualisierungsstrahl (auch genannt "Visualisierungslichtstrahl") zu erzeugen. Aufgrund der begrenzten Lichtleistung von Lichtquellen für den optischen Messstrahl 126, beispielsweise herkömmlichen SLDs, kann die Visualisierungseinheit 370 mit der Lichtquelle 372 vorgesehen sein, um die Position des optischen Messstrahls 126 im Bild sichtbar zu machen.

Licht der Visualisierungseinheit 370 wird vorzugsweise in den Strahlengang des optischen Messstrahls 126 eingekoppelt. Das Einkoppeln erfolgt vorzugsweise über einen Strahlteiler, beispielsweise den Faserkoppler 138, der eingerichtet ist, den Visualisierungsstrahl in die Lichtleitfaser 142 des Messarms der optischen Messvorrichtung 128 einzukoppeln. Demnach wird ein Visualisierungsfleck, der durch das Einstrahlen des Visualisierungsstrahls auf das Werkstück 10 entsteht, mit dem Messfleck 18 überlagert, und kann insbesondere konzentrisch mit dem Messfleck 18 sein.

Denn dadurch, dass das von der Visualisierungseinheit 370 erzeugte Licht bereits in eine Lichtleitfaser des optischen Kohärenztomographen eingekoppelt wird, wird der Visualisierungsfleck durch die optische Abbildung im Bearbeitungskopf 122 auf dieselbe laterale Position auf dem Werkstück 10 wie der Messstrahl 126 abgebildet. Im Gegensatz zu einer Einkopplung bzw. Überlagerung im Bearbeitungskopf 122 durch einen Strahlteiler im Bearbeitungskopf 122 kommt es bei der Einkopplung in die Lichtleitfaser des optischen Kohärenztomographen zu keinem lateralen Versatz aufgrund von Justagefehlern oder sonstigen Ungenauigkeiten. Besitzen optischer Kohärenztomograph und Beleuchtungslichtquelle unterschiedliche Wellenlängen, kann es zwar zu einer axialen Verschiebung der beiden Fokuspositionen kommen. Eine laterale Verschiebung der Fokuspunkte findet bei koaxialem Verlauf beider Strahlen jedoch nicht statt. Demnach sind der Messfleck und der Visualisierungsfleck konzentrisch.

Da an die Lichtquelle 372 der Visualisierungseinheit 370 keine weiteren Anforderungen gestellt werden, kann eine Lichtquelle 372 mit möglichst hoher Lichtleistung gewählt werden. Weiterhin kann die Wellenlänge bzw. der Wellenlängenbereich des von der Lichtquelle 372 erzeugten Lichts auf den spektralen Empfindlichkeitsbereich der Bilderfassungseinheit 152 angepasst werden. Im Fall von optischen Kohärenztomographen, die optische Messtrahlen mit einer Wellenlänge nahe bei der Wellenlänge des Laserlichts verwenden, kann die Wellenlänge der Lichtquelle 372 so gewählt werden, dass sie spektral ausreichend weit von der Wellenlänge des Laserlichts entfernt ist. Somit kann der Notch-Filter 154 dahingehend optimiert werden, dass er Licht des Laserstrahls 148 maximal unterdrückt und gleichzeitig bezüglich einer Wellenlänge der Lichtquelle 372 maximal transparent ist.

Der Visualisierungsstrahl dient also zur Visualisierung des Auftreffpunkts des optisches Messstrahls 126 und macht den Auftreffort des Messtrahls, bzw. den Messfleck 18 im Kamerabild besser sichtbar. Denn der Visualisierungsfleck ist konzentrisch mit dem Messfleck und deutlich heller als der Messfleck und kann deshalb einfacher von der Bilderfassungseinheit 152 detektiert werden.

Es ist vorteilhaft, die Wellenlänge des von der Lichtquelle 372 emittierten Lichts kurzwelliger zu wählen, als die Wellenlänge des optischen Kohärenztomographen oder des optischen Messstrahls 126. Typischerweise ist es für den optischen Kohärenztomographen erforderlich, sogenannte Monomode-Fasern zu verwenden. Diese Fasern haben einen Kerndurchmesser, der ungefähr einem Zehntel der Wellenlänge entspricht, die davon transportiert werden soll. Dadurch kann sich in dem Wellenleiter lediglich die transversale Grundmode "TEM00" ausbreiten. Die sogenannte "Cut-off Wellenlänge" einer Lichtleitfaser gibt die Wellenlänge an, bis zu der sich lediglich die TEM00-Mode ausbreiten kann. Wird kurzwelligeres Licht eingekoppelt, können sich auch höher transversale Moden ausbilden und man spricht von einer sogenannten Multimode-Faser. Für die Wellenlänge des von der Lichtquelle 372 erzeugten Lichts bedeutet das, dass bei ausreichender Durchmischung der Moden in der Lichtleitfaser der Austrittsdurchmesser größer ist als bei einer Monomode-Faser. Das Zentrum der Lichtverteilung bleibt jedoch gleich, weshalb das Zentrum und damit die laterale Position des Auftreffortes des Messstrahls immer noch detektiert werden kann. Wird hingegen die Wellenlänge der Lichtquelle 372 langwelliger als die Wellenlänge des optischen Kohärenztomographen gewählt, so treten bei der Einkopplung in die Lichtleitfaser enorme Verluste auf, weshalb der Effekt einer leistungsstarken Lichtquelle 372 zunichte gemacht wird.

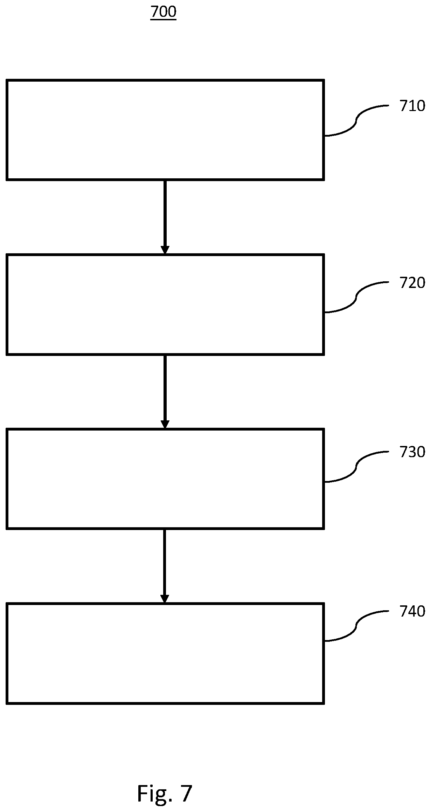

Fig. 7 zeigt ein Verfahren zum Bearbeiten eines Werkstücks mittels eines Laserstrahls gemäß einer Ausführungsform der Erfindung. Das Verfahren kann durch ein Laserbearbeitungssystem gemäß den hierin beschriebenen Ausführungsformen ausgeführt werden und weist folgende Schritte auf.

In Schritt 710 wird ein Laserstrahl 148 auf eine Werkstückoberfläche 16 eingestrahlt, um eine Dampfkapillare zu erzeugen. Anschließend oder gleichzeitig wird in Schritt 720 ein optischer Messstrahl 126 auf das Werkstück 10 eingestrahlt, um eine Tiefe der Dampfkapillare 12 zu messen. In Schritt 730 wird ein Bild von einem Bereich der Werkstückoberfläche 16, der die Dampfkapillare 12 und einen durch Einstrahlen des optischen Messstrahls 126 erzeugten Messfleck 18 umfasst, erfasst. Basierend auf dem erfassten Bild wird in Schritt 740 eine Position des Messflecks 18 und eine Position der Dampfkapillare 12 auf dem Werkstück 10, genauer gesagt auf der Werkstückoberfläche 16, bestimmt. Die Schritte 710, 720, 730 und 740 können quasi gleichzeitig ausgeführt werden, sodass eine relative Ausrichtung des Messflecks 18 zur Dampfkapillare 12 quasi in Echtzeit bestimmt und/oder eingestellt werden kann.

Der Schritt des Bestimmens 740 kann eine Auswertung des erfassten Bildes umfassen. Bei der Auswertung können unter anderem geometrische Eigenschaften der Dampfkapillare 12 und/oder des Messflecks 18 erkannt bzw. detektiert werden. Die Auswertung kann ferner die Bestimmung eines Mittelpunkts der Dampfkapillare 12 und eines Mittelpunkts des Messflecks 18 umfassen. Bei den Mittelpunkten kann es sich um flächenmäßige Schwerpunkte handeln. Das Verfahren kann ferner einen Schritt (nicht gezeigt) des Regelns bzw. Einstellen der Position des Messflecks 18 umfassen. Insbesondere kann die Position des Messflecks 18 in Bezug auf die Dampfkapillare 12 so eingestellt werden, dass eine maximale Tiefe der Dampfkapillare 12 mit dem optischen Messstrahl 126 messbar ist oder gemessen wird.

Erfindungsgemäß können also ein Auftreffort des optischen Messstrahls, d.h. die Position des Messflecks, und die Position der Dampfkapillare bzw. der Dampfkapillare 12 gleichzeitig bestimmt werden, um so eine mittels des optischen Messstrahls gemessene Tiefe einem bestimmten Punkt der Dampfkapillare zuzuordnen. Insbesondere kann die Position des Messflecks relativ zur Dampfkapillare derart eingestellt werden, dass eine maximale Tiefe der Dampfkapillare bestimmt werden kann. Mit anderen Worten kann der Messstrahl auf einen Punkt der Dampfkapillare mit maximaler Tiefe gerichtet werden. Dieser Punkt liegt im Allgemeinen am in Bearbeitungsrichtung rückwärtigen Rand der Dampfkapillare. Die Positionsbestimmung des Messflecks und der Dampfkapillare können nahezu in Echtzeit erfolgen und ermöglichen somit eine kontinuierliche und zuverlässige Tiefenmessung der Dampfkapillare. Dadurch kann eine Bearbeitungsqualität, insbesondere beim Laserschweißen, erhöht werden.

## Patentansprüche

1. Laserbearbeitungssystem (100, 200, 300), insbesondere ein Laserschweißsystem, zur Bearbeitung eines Werkstücks (10) mittels eines Laserstrahls (148), wobei das Laserbearbeitungssystem umfasst:
- einen Laserbearbeitungskopf (122) zum Einstrahlen eines Laserstrahls auf ein Werkstück (10) zur Erzeugung einer Dampfkapillare (12);
- eine optische Messvorrichtung (128) zur Messung einer Tiefe der Dampfkapillare (12) mittels eines optischen Messstrahls (126);
- eine Bilderfassungseinheit (152), die eingerichtet ist, ein Bild (400) von einem Bereich des Werkstücks (10) zu erfassen, der die Dampfkapillare (12) und einen durch den optischen Messstrahl (126) auf dem Werkstück (10) erzeugten Messfleck (18) umfasst,
**dadurch gekennzeichnet, dass**
das Laserbearbeitungssystem eingerichtet ist, basierend auf dem erfassten Bild (400) eine Position des Messflecks (18) und eine Position der Dampfkapillare (12) für die Messung der Tiefe der Dampfkapillare (12) zu bestimmen, und
wobei das Laserbearbeitungssystem ferner eine Einstellvorrichtung umfasst, die eingerichtet ist, um die Position des Messflecks (18) auf die für die Messung der Tiefe der Dampfkapillare (12) bestimmte Position der Dampfkapillare (12) einzustellen.

2. Laserbearbeitungssystem gemäß Anspruch 1,
wobei das Laserbearbeitungssystem eingerichtet ist, einen Punkt am in Bearbeitungsrichtung rückwärtigen Rand der Dampfkapillare (12) als die Position der Dampfkapillare (12) für die Messung der Tiefe der Dampfkapillare (12) zu bestimmen.

3. Laserbearbeitungssystem gemäß einem der vorausgehenden Ansprüche, wobei die optische Messvorrichtung (128) einen optischen Kohärenztomographen umfasst.

4. Laserbearbeitungssystem gemäß einem der vorausgehenden Ansprüche, wobei die Bilderfassungseinheit (152) einen Notch-Filter (154) aufweist, der eingerichtet ist, einen Wellenlängenbereich des Laserstrahls (148) zu blocken.

5. Laserbearbeitungssystem gemäß einem der vorausgehenden Ansprüche, wobei die Bilderfassungseinheit (152) eine spektrale Empfindlichkeit im Wellenlängenbereich einer von der Dampfkapillare (12) emittierten thermischen Strahlung und/oder im Wellenlängenbereich des optischen Messstrahls (126) aufweist.

6. Laserbearbeitungssystem gemäß einem der vorausgehenden Ansprüche, wobei die Bilderfassungseinheit (152) mindestens eines von einer Kamera, einer CCD-Kamera, einer Video-Kamera, einer CMOS-Kamera und einer Infrarot-Kamera umfasst.

7. Laserbearbeitungssystem gemäß einem der vorausgehenden Ansprüche, wobei die Bilderfassungseinheit (152) koaxial am Laserbearbeitungskopf (122) angeordnet ist.

8. Laserbearbeitungssystem gemäß einem der vorausgehenden Ansprüche, wobei optische Achsen der Bilderfassungseinheit (152) und des Messstrahls (126) zumindest teilweise parallel und/oder koaxial verlaufen.

9. Laserbearbeitungssystem gemäß einem der vorausgehenden Ansprüche, ferner umfassend:
- eine Beleuchtungseinheit (256) zum Beleuchten des erfassten Bereichs des Werkstücks (10) mittels sichtbaren Lichts und/oder Infrarot-Lichts.

10. Laserbearbeitungssystem gemäß Anspruch 9, wobei die Beleuchtungseinheit (256) so angeordnet ist, dass Licht von der Beleuchtungseinheit (256) auf das Werkstück (10) außerhalb des Laserbearbeitungskopfes (122) gerichtet ist.

11. Laserbearbeitungssystem gemäß Anspruch 9, wobei die Beleuchtungseinheit (256) eingerichtet ist, Licht in den Strahlengang des Laserstrahls (148) und/oder des optischen Messstrahls (126) und/oder der Bilderfassungseinheit (152) einzukoppeln.

12. Laserbearbeitungssystem gemäß einem der vorausgehenden Ansprüche, ferner umfassend:
- eine Visualisierungseinheit (370), die eingerichtet ist, einen Visualisierungsstrahl zur Visualisierung des Messflecks (18) in den Strahlengang des Messstrahls (126) cinzukoppeln,
wobei ein durch den Visualisierungsstrahl erzeugter Visualisierungsfleck konzentrisch mit dem Messfleck (18) ist,
wobei eine Wellenlänge des Visualisierungsstrahls verschieden von einer Wellenlänge des Messstrahls (18) ist.

13. Laserbearbeitungssystem gemäß Anspruch 12, wobei die Visualisierungseinheit (370) eingerichtet ist, den Visualisierungsstrahl in eine Lichtleitfaser (142) der optischen Messvorrichtung (128) einzukoppeln, in der der optische Messstrahl (126) geführt ist.

14. Laserbearbeitungssystem gemäß einem der vorausgehenden Ansprüche, ferner umfassend eine Recheneinheit, die eingerichtet ist, die Position des Messflecks (18) relativ zur Position der Dampfkapillare (12) in Echtzeit zu regeln, um kontinuierlich eine maximale Tiefe der Dampfkapillare zu bestimmen.

15. Verfahren (700) zum Steuern eines Laserbearbeitungssystems, insbesondere eines Laserschweißsystems, wobei das Verfahren die Schritte umfasst:
- Einstrahlen (710) eines Laserstrahls (148) auf ein Werkstück (10) und Erzeugen einer Dampfkapillare (12);
- Einstrahlen (720) eines optischen Messstrahls (126) auf das Werkstück (10) zum Messen einer Tiefe der Dampflcapillare (12);
- Erfassen (730) eines Bildes (400) von einem Bereich des Werkstücks (10), der die Dampfkapillare (12) und einen durch den optischen Messstrahl (126) erzeugten Messfleck (18) umfasst;
**gekennzeichnet durch**
- Bestimmen (740), basierend auf dem erfassten Bild (400), einer Position des Messflecks (18) und einer Position der Dampfkapillare (12) für die Messung der Tiefe der Dampfkapillare (12), und
- Einstellen der Position des Messflecks (18) auf die bestimmte Position der Dampfkapillare (12) für die Messung der Tiefe der Dampfkapillare (12).

## Claims

1. A laser machining system (100, 200, 300), in particular a laser welding system, for machining a workpiece (10) by means of a laser beam (148), wherein the laser machining system comprises:
- a laser machining head (122) for irradiating a laser beam onto a workpiece (10) for generating a vapor capillary (12);
- an optical measuring device (128) for measuring a depth of the vapor capillary (12) by means of an optical measuring beam (126);
- an image capturing unit (152) adapted to capture an image (400) of an area of the workpiece (10) comprising the vapor capillary (12) and a measuring spot (18) generated on the workpiece (10) by the optical measuring beam (126),
**characterised in that**
the laser machining system is adapted to determine a position of the measuring spot (18) and a position of the vapor capillary (12) for measuring the depth of the vapor capillary (12) based on the captured image (400), and
wherein the laser machining system further comprises an adjustment device adapted to adjust the position of the measuring spot (18) to the position of the vapor capillary (12) determined for measuring the depth of the vapor capillary (12).

2. Laser machining system according to claim 1,
wherein the laser machining system is adapted to determine a point at the rear edge of the vapor capillary (12) in the machining direction as the position of the vapor capillary (12) for measuring the depth of the vapor capillary (12).

3. Laser machining system according to any one of the preceding claims, wherein the optical measuring device (128) comprises an optical coherence tomograph.

4. Laser machining system according to any one of the preceding claims, wherein the image capturing unit (152) includes a notch filter (154) adapted to block a wavelength range of the laser beam (148).

5. Laser machining system according to any one of the preceding claims, wherein the image capturing unit (152) includes a spectral sensitivity in the wavelength range of a thermal radiation emitted from the vapor capillary (12) and/or in the wavelength range of the optical measuring beam (126).

6. Laser machining system according to any one of the preceding claims, wherein the image capturing unit (152) comprises at least one of a camera, a CCD camera, a video camera, a CMOS camera, and an infrared camera.

7. Laser machining system according to any one of the preceding claims, wherein the image capturing unit (152) is coaxially arranged on the laser machining head (122).

8. Laser machining system according to any one of the preceding claims, wherein optical axes of the image capturing unit (152) and the measuring beam (126) are at least partially parallel and/or coaxial.

9. Laser machining system according to any one of the preceding claims, further comprising:
- an illumination unit (256) for illuminating the captured area of the workpiece (10) by means of visible light and/or infrared light.

10. Laser machining system according to claim 9, wherein the illumination unit (256) is arranged such that light from the illumination unit (256) is directed to the workpiece (10) outside the laser machining head (122).

11. Laser machining system according to claim 9, wherein the illumination unit (256) is arranged to couple light into the beam path of the laser beam (148) and/or the optical measuring beam (126) and/or the image capturing unit (152).

12. Laser machining system according to any one of the preceding claims, further comprising:
- a visualization unit (370) adapted to couple a visualization beam for visualization of the measuring spot (18) into the beam path of the measuring beam (126),
wherein a visualization spot generated by the visualization beam is concentric with the measuring spot (18),
wherein a wavelength of the visualization beam is different from a wavelength of the measuring beam (18).

13. Laser machining system according to claim 12, wherein the visualization unit (370) is adapted to couple the visualization beam into an optical fiber (142) of the optical measuring device (128) in which the optical measuring beam (126) is guided.

14. Laser machining system according to any one of the preceding claims, further comprising a computing unit adapted to control the position of the measuring spot (18) relative to the position of the vapor capillary (12) in real time to continuously determine a maximum depth of the vapor capillary.

15. A method (700) for controlling a laser machining system, in particular a laser welding system, wherein the method comprises the steps of:
- irradiating (710) a laser beam (148) onto a workpiece (10) and generating a vapor capillary (12);
- irradiating (720) an optical measuring beam (126) onto the workpiece (10) to measure a depth of the vapor capillary (12);
- capturing (730) an image (400) of an area of the workpiece (10) comprising the vapor capillary (12) and a measuring spot (18) generated by the optical measuring beam (126);
**characterised by**
- determining (740), based on the captured image (400), a position of the measuring spot (18) and a position of the vapor capillary (12) for measuring the depth of the vapor capillary (12), and
- adjusting the position of the measuring spot (18) to the determined position of the vapor capillary (12) for measuring the depth of the vapor capillary (12).

## Revendications

1. Système d'usinage au laser (100, 200, 300), en particulier système de soudage au laser, destiné à usiner une pièce (10) au moyen d'un faisceau laser (148), dans lequel le système d'usinage au laser comprend :
- une tête d'usinage au laser (122) pour projeter un faisceau laser sur une pièce (10) afin de générer un capillaire de vapeur (12) ;
- un dispositif de mesure optique (128) pour mesurer une profondeur du capillaire de vapeur (12) au moyen d'un faisceau de mesure optique (126) ;
- une unité d'acquisition d'image (152) configurée pour capturer une image (400) d'une zone de la pièce (10) incluant le capillaire de vapeur (12) et un spot de mesure (18) généré par le faisceau de mesure optique (126) sur la pièce (10),
**caractérisé en ce que**
le système d'usinage au laser est configuré pour, sur la base de l'image (400) capturée, déterminer une position du spot de mesure (18) et une position du capillaire de vapeur (12) afin de mesurer la profondeur du capillaire de vapeur (12), et
dans lequel le système d'usinage au laser comprend en outre un dispositif de réglage configuré pour régler la position du spot de mesure (18) par rapport à la position déterminée du capillaire de vapeur (12) afin de mesurer la profondeur du capillaire de vapeur (12).

2. Système d'usinage au laser selon la revendication 1,
dans lequel le système d'usinage au laser est configuré pour déterminer un point sur le bord du capillaire de vapeur (12) situé en arrière dans la direction d'usinage, comme étant la position du capillaire de vapeur (12) afin de mesurer la profondeur du capillaire de vapeur (12).

3. Système d'usinage au laser selon l'une des revendications précédentes, dans lequel le système de mesure optique (128) comprend un tomographe à cohérence optique.

4. Système d'usinage au laser selon l'une des revendications précédentes, dans lequel l'unité d'acquisition d'image (152) comporte un filtre coupe-bande (152) configuré pour bloquer une gamme de longueurs d'onde du faisceau laser (148).

5. Système d'usinage au laser selon l'une des revendications précédentes, dans lequel l'unité d'acquisition d'image (152) a une sensibilité spectrale dans la gamme de longueurs d'onde d'un rayonnement thermique émis par le capillaire de vapeur (12) et/ou dans la gamme de longueurs d'onde du faisceau de mesure optique (126).

6. Système d'usinage au laser selon l'une des revendications précédentes, dans lequel l'unité d'acquisition d'image (152) comprend au moins un élément parmi une caméra, une caméra CCD, une caméra vidéo, une caméra CMOS et une caméra infrarouge.

7. Système d'usinage au laser selon l'une des revendications précédentes, dans lequel l'unité d'acquisition d'image (152) est agencée coaxialement sur la tête d'usinage au laser (122).

8. Système d'usinage au laser selon l'une des revendications précédentes, dans lequel des axes optiques de l'unité d'acquisition d'image (152) et du faisceau de mesure (126) s'étendent de manière au moins partiellement parallèle et/ou coaxiale.

9. Système d'usinage au laser selon l'une des revendications précédentes, comprenant en outre :
- une unité d'éclairage (256) pour éclairer la zone capturée de la pièce (10) au moyen d'une lumière visible et/ou d'une lumière infrarouge.

10. Système d'usinage au laser selon la revendication 9, dans lequel l'unité d'éclairage (256) est agencée de manière à diriger la lumière de l'unité d'éclairage (256) sur la pièce (10) à l'extérieur de la tête d'usinage au laser (122).

11. Système d'usinage au laser selon la revendication 9, dans lequel l'unité d'éclairage (256) est configurée pour coupler la lumière dans le trajet de faisceau du faisceau laser (148) et/ou du faisceau de mesure optique (126) et/ou de l'unité d'acquisition d'image (152).

12. Système d'usinage au laser selon l'une des revendications précédentes, comprenant en outre :
- une unité de visualisation (370) configurée pour coupler un faisceau de visualisation afin de visualiser le spot de mesure (18) dans le trajet de faisceau du faisceau de mesure (126),
dans lequel un spot de visualisation généré par le faisceau de visualisation est concentrique au spot de mesure (18),
dans lequel une longueur d'onde du faisceau de visualisation est différente d'une longueur d'onde du faisceau de mesure (18).

13. Système d'usinage au laser selon la revendication 12, dans lequel l'unité de visualisation (370) est configurée pour coupler le faisceau de visualisation dans une fibre de conduction de lumière (142) du dispositif de mesure optique (128), dans laquelle le faisceau de mesure optique (126) est guidé.

14. Système d'usinage au laser selon l'une des revendications précédentes, comprenant en outre une unité de calcul configurée pour réguler en temps réel la position du spot de mesure (18) par rapport à la position du capillaire de vapeur (12), afin de déterminer en continu une profondeur maximale du capillaire de vapeur.

15. Procédé (700) de commande d'un système d'usinage au laser, en particulier d'un système de soudage au laser, dans lequel le procédé comprend les étapes consistant à :
- projeter (710) un faisceau laser (148) sur une pièce (10) et générer un capillaire de vapeur (12) ;
- projeter (720) un faisceau de mesure optique (126) sur la pièce (10) pour mesurer une profondeur du capillaire de vapeur (12) ;
- capturer (730) une image (400) d'une zone de la pièce (10) incluant le capillaire de vapeur (12) et un spot de mesure (18) généré par le faisceau de mesure optique (126),
**caractérisé par** les étapes consistant à :
- déterminer (740), sur la base de l'image (400) capturée, une position du spot de mesure (18) et une position du capillaire de vapeur (12) afin de mesurer la profondeur du capillaire de vapeur (12), et
- régler la position du spot de mesure (18) par rapport à la position déterminée du capillaire de vapeur (12) afin de mesurer la profondeur du capillaire de vapeur (12).
